# EUROPÄISCHE PATENTSCHRIFT

(11) **EP 2 670 666 B1**
(45) Veröffentlichungstag und Bekanntmachung des Hinweises auf die Patenterteilung: **04.03.2020**
(21) Anmeldenummer: 11782059.7
(22) Anmeldetag: 08.11.2011
(51) Int. Cl.: B65B 3/02, B29C 49/46

(54) **VERFAHREN SOWIE VORRICHTUNG ZUM HERSTELLEN VON MIT EINEM FLÜSSIGEN FÜLLGUT GEFÜLLTEN BEHÄLTERN**
METHOD AND APPARATUS FOR MAKING LIQUID-FILLED CONTAINERS
PROCÉDÉ ET APPAREIL POUR FABRIQUER DE RÉCIPIENTS REMPLIS D'UN LIQUIDE

(30) Priorität: 28.02.2011 DE 102011012665; 31.01.2011 DE 102011009888; 31.01.2011 DE 102011009889; 11.02.2011 DE 102011011076; 28.02.2011 DE 102011012664
(43) Veröffentlichungstag der Anmeldung: 11.12.2013
(73) Patentinhaber: KHS GmbH, 44143 Dortmund (DE); KHS Corpoplast GmbH, 22145 Hamburg (DE)
(72) Erfinder: HAESENDONCKX, Frank, 22145 Hamburg (DE); KLATT, Dieter, 22147 Hamburg (DE)
(74) Vertreter: Meissner Bolte Partnerschaft mbB
(86) Internationale Anmeldenummer: PCT/EP2011/005596
(87) Internationale Veröffentlichungsnummer: WO 2012/103905

(56) Entgegenhaltungen:
- EP-A1- 0 375 912
- WO-A1-01/19594
- WO-A1-2009/075791
- WO-A1-2011/076167
- WO-A2-2007/120807
- GB-A- 1 474 044
- JP-A- 2000 043 129

## Beschreibung

Die Erfindung betrifft ein Verfahren gemäß Oberbegriff Patentanspruch 1 sowie eine Vorrichtung gemäß Oberbegriff Patentanspruch 14.

Bekannt ist die Herstellung von Behältern durch Blasformen aus Vorformlingen aus einem thermoplastischen Material, beispielsweise aus Vorformlingen aus PET (Polyethylenterephthalat), wobei die Vorformlinge innerhalb einer Blasmaschine unterschiedlichen Bearbeitungsstationen zugeführt werden (DE-OS 43 40 291). Typischerweise weist eine Blasmaschine eine Heizeinrichtung zum Temperieren oder Vorerhitzen (thermisches Konditionieren) der Vorformlinge sowie eine Blaseinrichtung mit wenigstens einer Blasstation auf, in deren Bereich der jeweils zuvor temperierte Vorformling biaxial oder multiaxial zu einem Behälter expandiert wird. Die Expansion erfolgt mit Hilfe eines Druckgases (Druckluft) als Druckmedium, das mit einem Formdruck in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation ist in der DE-OS 42 12 583 beschrieben. Möglichkeiten der Temperierung der Vorformlinge sind in der DE-OS 23 52 926 erläutert.

Gemäß einem typischen Weiterverarbeitungsverfahren werden die durch Blasformen hergestellten Behälter einer nachfolgenden Fülleinrichtung zugeführt und hier mit dem vorgesehenen Produkt oder Füllgut gefüllt. Es werden also eine separate Blasmaschine und eine separate Füllmaschine verwendet. Bekannt ist es dabei auch, die separate Blasmaschine und die separate Füllmaschine zu einem Maschinenblock, d.h. zu einer verblockten Blas-Füll-Einrichtung zusammen zu fassen, wobei weiterhin das Blasformen und das Füllen an gesonderten Maschinenkomponenten und zeitlich nacheinander erfolgen.

Es wurde weiterhin bereits vorgeschlagen, Behälter, insbesondere auch in Form von Flaschen aus thermisch konditionierten bzw. vorerhitzten Vorformlingen herzustellen und dabei gleichzeitig mit einem flüssigen Füllgut zu füllen, welches als hydraulisches Druckmedium zum Expandieren des Vorformlings bzw. zum Ausformen des Behälters mit einem Form- und Fülldruck zugeführt wird, sodass zeitgleich mit dem Füllen der jeweilige Vorformling in den Behälter verformt wird (z.B JP 2000 043129 A, WO 2009/075791 A1). Derartige Verfahren, bei denen ein gleichzeitiges Formen und Füllen des jeweiligen Behälters erfolgt, können auch als hydraulische Ausformverfahren oder hydraulische Behälterformung bezeichnet werden.

Bei einem Formen der Behälter aus den Vorformlingen durch das Füllgut selbst, d.h. unter Verwendung des Füllgutes als hydraulisches Druckmedium wird für das Formen und Füllen der Behälter nur noch eine Maschine benötigt, die dafür allerdings eine erhöhte Komplexität aufweist. Erste Versuchsergebnisse mit derartigen Einrichtungen zeigen allerdings, dass die Qualität der hergestellten Behälter noch deutlich unterhalb der Qualität von konventionell hergestellten blasgeformten Behältern liegt. Ursache hierfür ist u.a., dass eine Vielzahl von Prozessparametern, die bei der Durchführung des üblichen Blasformens verfügbar sind, bei der hydraulischen Behälterformung entweder nicht vorliegen oder noch nicht erschlossen werden konnte.

Eine besondere Problematik besteht bei hydraulischen Behälterformung auch darin, dass eine Verschmutzung der jeweiligen Form- und Füllstation bzw. der diese Station bildenden Form, die ähnlich einer Blasform einer Blasformmaschine zum Herstellen von Behältern aus thermisch konditionierten Vorformlingen durch Blasen mit einem Druckgas ausgeführt ist, vermieden werden muss. Speziell im Falle einer Voll- oder Teilkarbonisierung des Füllgutes besteht im besonderem Maße die Gefahr einer Verschmutzung der jeweiligen Form- und Füllstation durch Füllgutverluste, insbesondere bei der Absenkung des Innendrucks des Behälters, d.h. bei der Entlastung des Behälters von dem recht hohen Form- und Fülldruck auf den Umgebungsdruck. Derartige Füllgutverluste sind insbesondere durch eine massive Schaumbildung beim Entlasten bedingt, sodass das gleichzeitige Formen und Füllen von Behältern unter Verwendung von Vorformlingen und unter Verwendung des Füllgutes als Druckmedium (hydraulische Ausformtechnik), insbesondere für CO2-haltige Produkte bisher nicht zum Einsatz kommen konnte.

Aufgabe der Erfindung ist es, ein Verfahren aufzuzeigen, welches bei dem hydraulischen Ausformverfahren bzw. bei der hydraulischen Behälterformung die Gefahr eines Verschmutzens der jeweiligen Form- und Füllstation auch bei einem CO2-haltigen Füllgut vermeidet, speziell auch bei hohen Durchsatzraten (Anzahl der geformten und gefüllten Behälter je Zeiteinheit) und/oder bei einem hohen CO2-Gehalt des in den jeweiligen Behälter eingebrachten Füllgutes.

Zur Lösung dieser Aufgabe ist ein Verfahren zur Herstellung von mit einem flüssigen Füllgut gefüllten Behältern entsprechend dem Patentanspruch 1 ausgebildet. Eine Vorrichtung zur Herstellung von mit einem flüssigen Füllgut gefüllten Behältern ist Gegenstand des Patentanspruchs 14.

Bei der Erfindung werden das Füllgut oder Anteile bzw. Komponenten des Füllgutes in zu mindest zwei Prozessphasen oder in wenigstens zwei Prozessphasen der jeweiligen Form- und Füllphase mit unterschiedlichen Gehalten an Kohlendioxid und/oder mit unterschiedlichen Temperaturen zugeführt.

Um eine möglichst hohe Produktqualität sicherzustellen, erfolgt bevorzugt eine Führung des jeweiligen Vorformlings bei seiner Umformung in eine sich entwickelnde Behälterblase und anschließend in den die endgültigen Kontur oder Formgebung aufweisenden Behälter, so dass ein typischerweise im Bereich einer Vorformlingskuppe angeordnetes Zentrum definiert und reproduzierbar positioniert wird. Eine derartige definierte Positionierung ist wichtig, da bei der Umformung bzw. Aufweitung des Vorformlings in den Behälter eine biaxiale Orientierung des Materials des Vorformlings durchgeführt wird und hierfür eine gezielte und vorgebbare Materialverteilung innerhalb der Wandung des geformten Behälters erforderlich ist. Bei einer unkontrollierten Behälterformung sind hingegen unerwünschte und insbesondere ungleichmäßige Materialverteilungen zu erwarten.

Eine besonders wirkungsvolle Führung während der Form- und Füllphase ist durch die Verwendung eines Reckstabes oder einer Reckstange möglich, wobei ein Teil des Füllgutes an der Reckstange vorbei und ein Teil des Füllgutes durch die Reckstange hindurch zugeführt wird.

Eine gleichmäßige hydraulische Behälterformung wird dadurch erreicht, dass das Füllgut mindestens zeitweilig mit einem konstanten Volumenstrom zugeführt wird. Möglichkeiten zur Beeinflussung der Materialverteilung innerhalb der Wandung des entstehenden oder ausgeformten Behälters werden dadurch erschlossen, dass das Füllgut mindestens zeitweilig mit einem variablen Volumenstrom zugeführt wird.

Eine äußerst kompakte Konstruktion wird dadurch unterstützt, dass die Behälter auf einem rotierenden Prozessrad oder Rotor geformt, gefüllt und verschlossen werden.

Eine weitere Ausführungsvariante besteht darin, dass eine generierte Reckkraft gemessen wird. Lediglich geringe von der Reckstange aufzubringende Reckkräfte können dadurch gewährleistet werden, dass ein Volumenstrom des Füllgutes in Abhängigkeit von einer gemessenen Reckkraft gesteuert wird.

Unabhängig von den vorgenannten Merkmalen oder zusätzlich zu diesen Merkmalen ist das erfindungsgemäße Verfahren in Weiterbildung der Erfindung vorzugsweise so ausgebildet,

dass in der zweiten Prozessphase das Füllgut oder der Anteil an Füllgut mit der höheren Konzentration an Kohlendioxid zu geführt wird, und/oder
dass das Füllgut oder der Anteil bzw. die Komponente des Füllgutes mit der höheren CO2-Konzentration vor dem Einleiten gekühlt wird und in der zweiten Prozessphase das Füllgut oder der Anteil des Füllgutes mit der höheren CO2- Konzentration eine tiefere Temperatur als das Füllgut oder der Anteil des
Füllgut der ersten Prozessphase aufweist,
und/oder
dass der Kohlendioxidgehalt bzw. CO2-Gehalt in einer zweiten Prozessphase 30Gew.-%, vorzugsweise 50 bis 100 Gew.-% über dem CO2-Gehalt der ersten Phase liegt,
und/oder
dass die Temperatur des Füllgutes oder des Anteils des Füllgutes der zweiten Prozessphase kleiner als 10 °C liegt, insbesondere zwischen 4°C und 8°C liegt, und/oder dass der Druck des Füllgutes oder des Anteils des Füllgutes, welches die höhere CO2-Konzentration und/oder die tiefere Temperatur aufweist, mindestens zeitweise während des Ausformungsprozesses höher ist, als mindestens ein anderer oder der restliche Anteil des Füllgutes, und zwar insbesondere um mindestens 1 bar höher ist,
und/oder
dass der Druck auf einer Teilleitungsstrecke höher ist als der Druck des Füllgutes oder des Anteils des Füllgutes, welcher die höhere Kohlendioxidkonzentration und/oder die tiefere Temperatur aufweist, und zwar vorzugsweise mindestens zeitweise während des Formungsprozesses oder während der Form- und Füllphase um 2 bar bis 5 bar höher ist als mindestens ein anderer oder der restliche Anteil des Füllgutes, und/oder
dass auf dem Strömungsweg des innerhalb des Reckstabes fließenden Füllgutes oder des Anteils des Füllgutes, eine Drosselelement oder Querschnittsverengung vorgesehen ist, wobei das Drosselelement insbesondere kurz vor wenigstens einem an der Reckstange gebildeten Auslass angeordnet ist,
und/oder
dass der Anteil des Füllgutes mit dem höheren CO2-Gehalt gekühlt wird, und/oder
dass der Anteil des Füllgutes mit dem höheren CO2-Gehalt durch die
Reckstange hindurch zugeführt wird,
und/oder
dass die Reckstange mindestens bereichsweise relativ zum Füllgut thermisch isoliert wird,
wobei die vorgenannten Merkmale jeweils einzeln oder in beliebiger Kombination vorgesehen sein können.

Die erfindungsgemäße Vorrichtung ist in Weiterbildung der Erfindung vorzugsweise so ausgebildet,
dass eine Kühlungseinheit entlang einer Leitung oder eine Leitungsabschnittes für denjenigen Anteil des Füllgutes vorgesehen ist, in welchem (Anteil) stromabwärts, d.h. nach dem Kühlen und Durchströmen des Leitungsabschnitts Kohlendioxid gelöst wird oder welcher der Leitung von der Karbonatisierungseinheit zuströmt,
und/oder
dass mindestens ein Leitungsabschnitt, in dem das Füllgut oder der Anteil des Füllgutes mit dem hohen CO2-Gehalt geführt wird, isoliert ist, insbesondere mit einer Isolierung, die aus Teflon oder aus einem teflonhaltigem Material besteht, und/oder
dass mindestens ein Leitungsabschnitt, in dem das Füllgut oder der Anteil des Füllgutes mit dem hohen CO2-Gehalt geführt wird, isolierend ausgekleidet ist, beispielsweise mit Teflon oder aus einem teflonhaltigem Material,
wobei die vorgenannten Merkmale jeweils einzeln oder in beliebiger Kombination vorgesehen sein können.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Der Ausdruck "µm Wesentlichen" oder "etwa" bedeutet im Sinne der Erfindung Abweichungen von jeweils exakten Werten um +/- 10%, bevorzugt um +/- 5% und/oder Abweichungen in Form von für die Funktion unbedeutenden Änderungen.

Die Erfindung wird im Folgenden anhand der Figuren an Ausführungsbeispielen näher erläutert. Es zeigen:
- Figur 1: eine schematische Darstellung eines Grundaufbaus einer Einrichtung oder Form- und Füllmaschine zur Durchführung der hydraulischen Behälterformung unter Verwendung eines Füllgutes,
- Figur 2: einen schematischen Längsschnitt durch einen Vorformling mit teilweise eingeführter Reckstange sowie einer Entlüftungseinrichtung,
- Figur 3: einen schematischen Längsschnitt durch einen geformten Behälter mit teilweise eingeführter Reck- und Fülleinrichtung,
- Figur 4: einen Längsschnitt durch eine Form- und Fülleinrichtung oder -station bei einer nicht erfindungsgemäßen Ausführungsform,
- Figur 5: einen Längsschnitt durch eine Form- und Fülleinrichtung oder -station mit einer Abdichtung zur Verhinderung eines Nachtropfens,
- Figur 6: eine nicht erfindungsgemäße Ausführungsform mit steuerbarer Zuführung des Füllgutes und separater steuerbarer Entlüftung,
- Figur 7: eine schematische Darstellung einer kombinierten Form-, Füll- und Verschließeinrichtung oder -station und
- Figur 8: eine andere Ausführungsform der kombinierten Form-, Füll- und Verschließeinrichtung oder -station gemäß Figur 7,
- Figuren 9 - 11: jeweils in schematischer Schnittdarstellung eine weitere Ausführungsform der Reckstange einer Form- und Füllmaschine oder -station gemäß der Erfindung in unterschiedlichen Prozessphasen;
- Figur 12: in ähnlicher Darstellung wie Figuren 10 - 12 eine weitere modifizierte Ausführungsform der Reckstange der erfindungsgemäßen Form- und Füllmaschine oder -station.

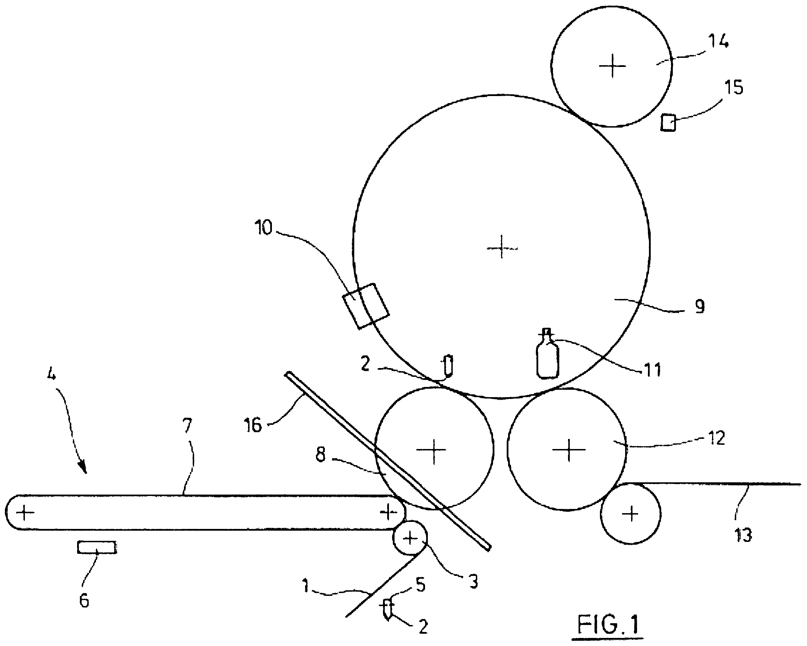

Der prinzipielle Aufbau einer kombinierten Form- und Füllvorrichtung oder -maschine ist in Figur 1 dargestellt. Von einer Zuführeinrichtung (1) werden schematisch dargestellte Vorformlinge (2), die auch als Preforms bezeichnet werden, unter Verwendung eines Übergaberades (3) von einer Heizeinrichtung (4) zugeführt. Im Bereich der Heizeinrichtung (4), in der die Vorformlinge (2) vorgeheizt bzw. thermisch konditioniert werden, können die Vorformlinge (2) anwendungsabhängig beispielsweise mit ihren Mündungsabschnitten (5) in lotrechter Richtung nach oben oder in lotrechter Richtung nach unten transportiert werden. Die Heizeinrichtung (4) ist beispielsweise mit Heizelementen (6) ausgestattet sein, die entlang einer Transporteinrichtung (7) angeordnet sind. Als Transporteinrichtung (7) kann beispielsweise eine umlaufende Kette verwendet werden. Als Heizelemente (6) eignen sich beispielsweise IR- oder NIR-Strahler sowie andere energieemittierende Strahler.

Nach einer ausreichenden Temperierung (auch thermische Konditionierung) werden die Vorformlinge (2) von einem Übergaberad (8) zu einem rotationsfähig angeordneten, d.h. um eine vertikale Maschinenachse umlaufend antreibbaren Rotor oder Prozessrad (9) bzw. an Form- und Füllstationen (10) übergeben, die an dem Rotor oder Prozessrad (9) vorgesehen sind. Das Prozessrad (9) ist mit einer Mehrzahl solcher Formstationen (19) ausgestattet, in deren Bereich sowohl eine Umformung der Vorformlinge (2) in die schematisch dargestellten Behälter (11) als auch eine Befüllung der Behälter (11) mit dem vorgesehenen Füllgut erfolgt. Das Formen jedes Behälters (11) erfolgt hierbei zeitgleich mit der Befüllung, wobei das Füllgut als Druckmedium beim Formen dient.

Nach dem Formen und Füllen werden die Behälter (11) von einem Entnahmerad (12) vom Prozessrad (9) wegtransportiert und einer Ausgabestrecke (13) zugeführt.

Gemäß der Ausführungsform in Figur 1 ist es vorgesehen, dem Prozessrad (9) über eine Eingabeeinrichtung (14) schematisch dargestellte Verschlusselemente (15) zuzuführen. Hierdurch ist es möglich, auf dem Prozessrad (9) auch bereits ein Verschließen der Behälter (11) durchzuführen und unter Verwendung der Entnahmeeinrichtung (12) fertig geformte, gefüllte und verschlossene Behälter (11) zu handhaben. Das Verschlusselement (15) kann beispielsweise als aufschraubbare Verschlusskappe, als Kronkorken oder als Siegelfolie ausgebildet sein.

Als Material für die Vorformlinge (1) können vorzugsweise unterschiedliche thermoplastische Materialien verwendet werden. Beispielhaft seien Polyethylenterephthalat (PET), Polyäthylen (PE), Polyäthylennaphthalat (PEN) oder Polypropylen (PP) genannt. Die Dimensionierung sowie das Gewicht der Vorformlinge (2) können an die Größe, das Gewicht und/oder an die Gestaltung der herzustellenden Behälter (11) angepasst werden.

Im Bereich der Heizeinrichtung (4) sind typischerweise eine Vielzahl von elektrischen und elektronischen Bauteilen angeordnet. Darüber hinaus sind die Heizelemente (6) mit feuchtigkeitsempfindlichen Reflektoren versehen. Da im Bereich des Prozessrades (9) unter Verwendung des flüssigen Füllgutes eine Befüllung und Formung der Behälter erfolgt, ist dafür zu sorgen, dass ein unbeabsichtigter Eintrag von Feuchtigkeit in den Bereich der Heizeinrichtung (4) vermieden wird. Dies kann beispielsweise durch eine Abschottung (16) erfolgen, die zumindest einen Spritzschutz bietet. Darüber hinaus ist es auch möglich, im Bereich des Übergaberades (8) verwendete Transportelemente für die Vorformlinge (2) geeignet zu temperieren oder mit Stößen von Druckgas derart zu beaufschlagen, dass anhaftende Feuchtigkeit nicht in den Bereich der Heizeinrichtung (4) gelangen kann.

Eine Handhabung der Vorformlinge (2) und/oder der Behälter (11) erfolgt vorzugsweise unter Verwendung von Zangen und/oder den Mündungsabschnitt (5) wenigstens bereichsweise von innen oder von außen beaufschlagenden Klemm- oder Steckelementen.

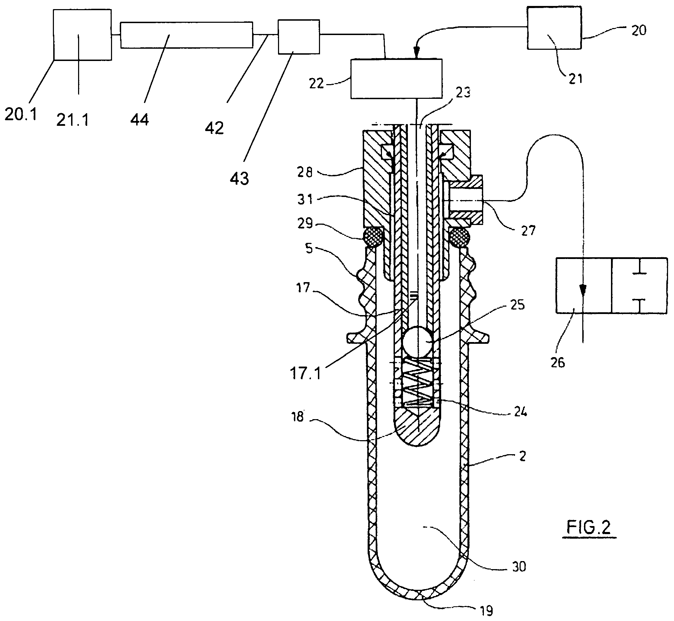

Figur 2 zeigt einen Längsschnitt durch einen Vorformling (2), in den ein Reckstab oder eine Reckstange (17) eingeführt ist. Die Reckstange (17) dient der mindestens zeitweisen Führung des Vorformlings (1) während seiner Umformung zum Behälter (11). Typischerweise erfolgt ein Kontakt zwischen einer Kuppe (18) der Reckstange (17) und einem Boden (19) des Vorformlings (2). Bei einem weiteren Einfahren der Reckstange (17) in den Vorformling (2) hinein wird eine Längsreckung des Vorformlings (2) verursacht. Nach einem Abschluss des Reckvorganges oder zumindest zeitweilig auch bereits während der Durchführung des Reckvorganges wird einer Vorratseinrichtung (20) entnommenes Füllgut (21) in den Vorformling (2) eingeleitet.

Eine Dosierung des Füllgutes (21) erfolgt unter Verwendung eines Mehrwegedosierventils (22). Beim dargestellten Ausführungsbeispiel ist die Reckstange (17) mindestens bereichsweise hohl bzw. mit einem Kanal ausgebildet und das Füllgut (21) wird einem Innenraum (23) der Reckstange (17) zugeführt. Im Bereich einer Wandung der Reckstange (17) sind Ausströmöffnungen (24) angeordnet, die von einem Rückschlagventil (25) gegenüber dem Mehrwegedosierventil (22) absperrbar sind. Hierdurch kann ein unbeabsichtigtes Heraustropfen von Füllgut (21) aus der Reckstange (17) vermieden bzw. minimiert werden.

Eine Entlüftung des Vorformlings (2) kann unter Verwendung eines Entlüftungventils (26) erfolgen. Das Entlüftungsventil (26) ist mit einer Ausströmöffnung (27) verbunden, die im Bereich eines den Vorformlings (1) beaufschlagenden Anschlusselementes (28) angeordnet ist. Durch das Anschlusselement (28) hindurch ist die Reckstange (17) positionierbar. Der Vorformling (2) wird gegenüber dem Anschlusselement (28) von einer Dichtung (29) abgedichtet, die beispielsweise als ein O-Ring ausgebildet sein kann. Ein Innenraum (30) des Vorformlings (2) kann über einen Ringspalt (31) mit der Ausströmöffnung (27) verbunden sein. Der Ringspalt (31) umschließt hierbei bereichsweise die Reckstange (17).

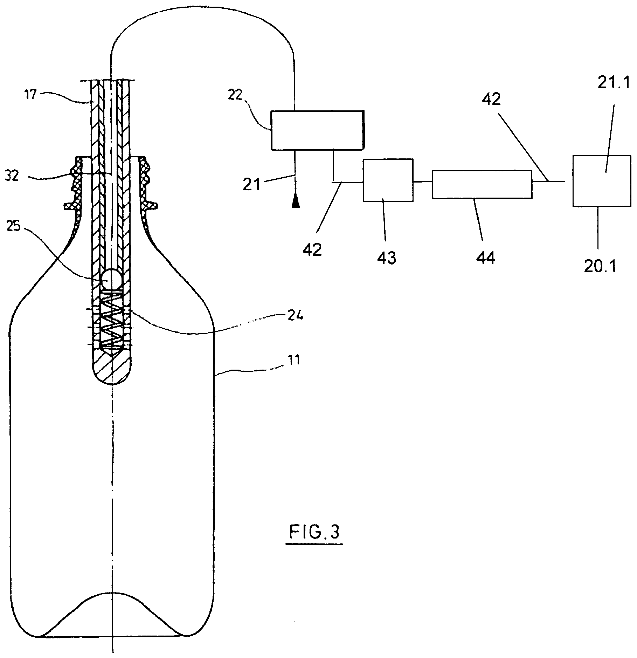

Figur 3 zeigt schematisch eine ähnliche Einrichtung wie in der Darstellung gemäß Figur 2 unter Verwendung einer hohlen Reckstange (17) mit einem eingebauten Rückschlagventil (25). Dargestellt ist allerdings ein bereits fertig geformter Behälter (11). Zu erkennen ist sowohl in Figur 2 als auch in Figur 3, dass vorzugsweise eine Mehrzahl von Ausströmöffnungen (24) im Bereich der Reckstange (17) angeordnet wird. Beim dargestellten Ausführungsbeispiel sind derartige Ausströmöffnungen (24) auf unterschiedlichen Höhenniveaus entlang einer Längsachse (32) der Reckstange (17) positioniert. Ebenfalls zeigt das dargestellte Ausführungsbeispiel eine Ausrichtung der Ausströmöffnungen (24) mit einer im Wesentlichen horizontalen Ausströmrichtung. Sowohl die Anordnung der Ausströmöffnungen (24) im Bereich der Reckstange (17) als auch die Ausrichtung der Ausströmöffnungen (24) ist aber variierbar. Angestrebt wird typischerweise ein möglichst ruhiges und spritzarmes Ausströmverhalten.

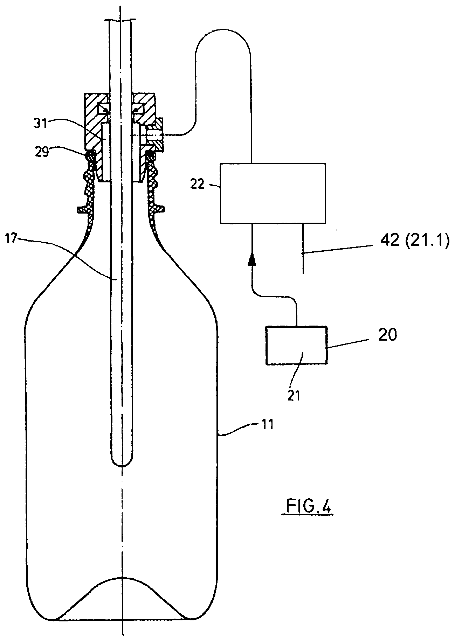

Gemäß einer nicht erfindungsgemäßen Ausführungsform in Figur 4 wird eine massive Reckstange (17) verwendet. Eine Zuführung des Füllgutes (21) erfolgt entlang mindestens eines Strömungskanals an der Reckstange (17) vorbei. Vorzugsweise wird hierzu der Ringspalt (31) verwendet. Auch bei dieser Ausführungsform ist es möglich, ein gezieltes Entlüften durchzuführen.

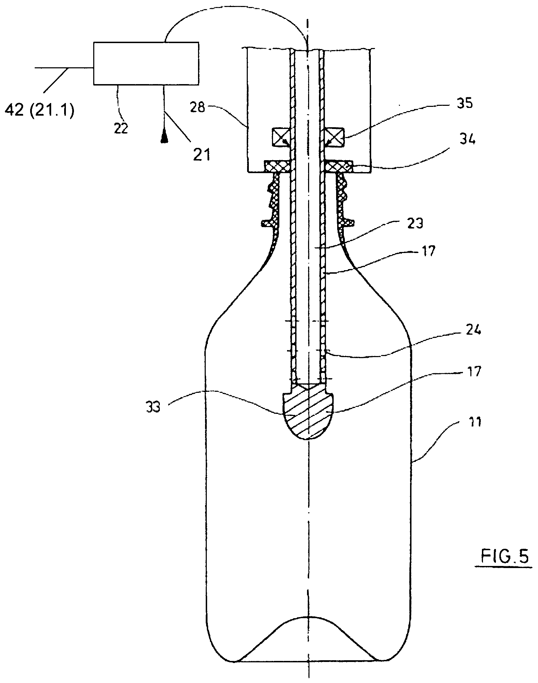

Figur 5 zeigt eine Ausführungsform, bei der die Reckstange (17) eine zur Verhinderung eines Nachtropfens optimierte Ausführungsform besitzt. Im Bereich der Kuppe (17) ist hierzu ein Dichtelement (33) angeordnet. Das Dichtelement (33) kann beispielsweise durch eine Durchmesservergrößerung der Reckstange (17) bereitgestellt werden. Ebenfalls ist eine geeignete Materialauswahl denkbar. Beim Zurückziehen der Reckstange (17) aus dem Behälter (11) heraus gelangt das Dichtelement (33) in Kontakt mit einem Gegenelement (33), das im Bereich des Anschlusselementes (28) angeordnet ist. Das Gegenelement (34) ist vorzugsweise als eine Dichtung ausgeführt. Die Ausströmöffnungen (24) der Reckstange (17) sind nach einer entsprechenden Positionierung der Reckstange (17) abgedichtet vom Behälter (11) getrennt angeordnet, so dass ein Nachtropfen aus dem Innenraum (23) der Reckstange (17) heraus sicher vermieden werden kann. Im Bereich des Anschlusselementes (28) ist typischerweise mindestens ein Lager (35) zur Führung der Reckstange (17) angeordnet.

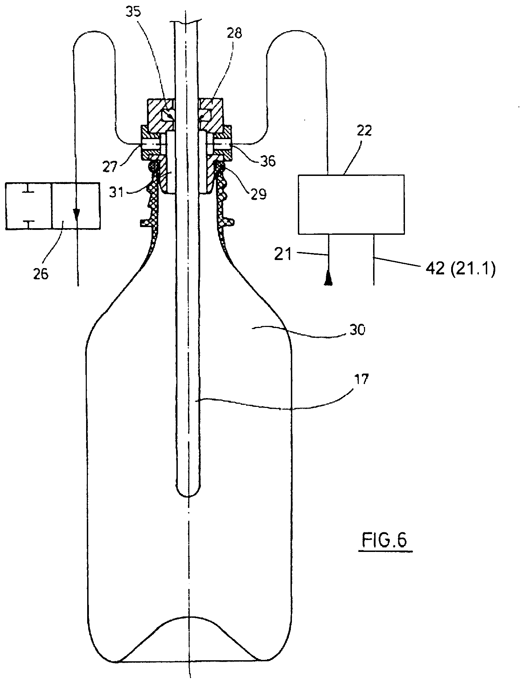

Figur 6 zeigt eine nicht erfindungsgemäße Ausführungsform, bei der wiederum eine massive Reckstange (17) verwendet wird. Durch an der Reckstange (17) vorbeilaufende Strömungskanäle, insbesondere durch den Ringspalt (31) hindurch, ist sowohl das Mehrwegedosierventil (22) für das Füllgut (21) als auch das Entlüftungsventil (26) mit dem Innenraum (30) des Vorformlings (2) bzw. des Behälters (11) verbunden. Beim dargestellten Ausführungsbeispiel ist die Ausströmöffnung (27) in einer radialen Richtung des Anschlusselementes (28) gegenüberliegend zu einer Zuführöffnung (36) angeordnet, die mit dem Mehrwegedosierventil (22) verbunden ist.

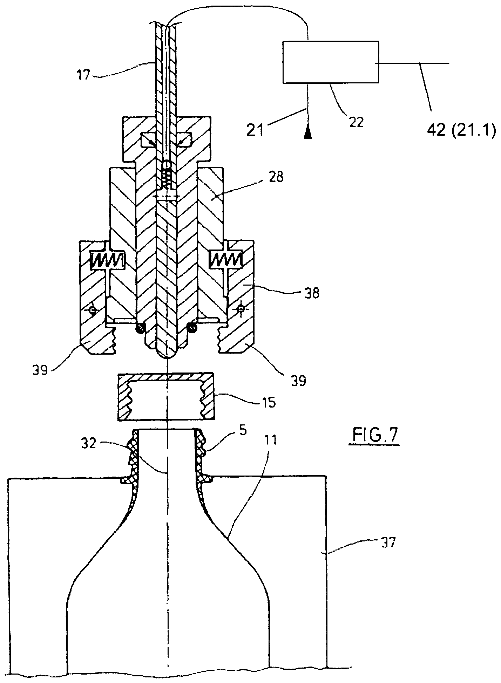

Figur 7 zeigt eine Ausführungsform, bei der im Bereich des Prozessrades (9) gemäß Figur 1 auch ein Verschließen der Behälter (11) erfolgt. Der Behälter (11) ist hierbei noch im Bereich einer Form (37) angeordnet, die einen Teil der Formstation (10) gemäß Figur 1 ausbildet. Eine Verschließeinrichtung (38) ist bei dieser Ausführungsform bezüglich der Längsachse (32) koaxial zum Anschlusselement (28) angeordnet. Die Verschließeinrichtung (38) besitzt beispielsweise verschwenkbar angeordnete Greifer (39), die zur Beaufschlagung des Verschlusselementes (15) vorgesehen sind. Insbesondere ist daran gedacht, die Verschließeinrichtung (38) drehbeweglich relativ zum Anschlusselement (28) anzuordnen. Hierdurch kann das Verschlusselement (15) mit einem Innengewinde auf ein Außengewindes des Mündungsabschnittes (5) aufgeschraubt werden.

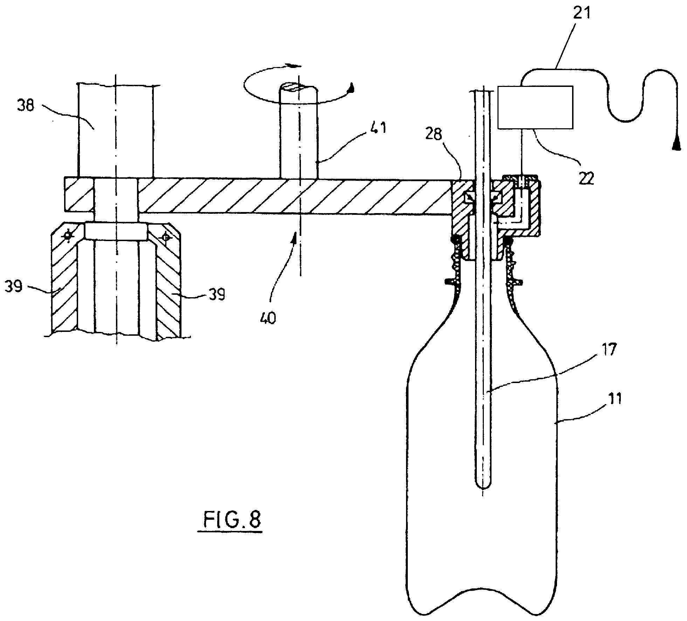

Figur 8 zeigt eine alternative Ausführungsform zur Konstruktion gemäß Figur 7. Die Verschließeinrichtung (38) und das Anschlusselement (28) sind hier nicht koaxial relativ zueinander angeordnet, sondern werden von einem Werkzeugträger (40) abwechselnd in einer Arbeitsanordnung bzw. einer Ruheanordnung positioniert. Der Werkzeugträger (40) kann beispielsweise revolverartig ausgebildet und mit einer Drehachse (41) versehen sein.

Nachfolgend werden einige Prozesstypische Parameter beispielhaft näher erläutert. Das Füllgut (21) wird dem Anschlusselement (28) vorzugsweise mit einer Temperatur des umgebenden Raumes, beispielsweise im Bereich von 20°C bis 30°C, zugeführt. Das Füllgut (21) kühlt hierdurch das Material des Behälters (11) und unterstützt eine schnelle Formstabilität des geformten Behälters (11). Hierdurch wird eine sehr kurze Zykluszeit unterstützt. Ebenfalls ist es aber möglich, das Füllgut (21) stärker gekühlt oder erwärmt zuzuführen.

Während der Formung des Behälters (11) kann das Füllgut (21) zumindest zeitweilig mit einem konstanten Volumenstrom in den Vorformling (2) bzw. den Behälter (11) eingeleitet werden. Es ist aber auch möglich, für den Volumenstrom ein geeignetes zeitliches Profil derart vorzugeben, dass zu unterschiedlichen Zeitpunkten unterschiedlich große Volumenströme generiert werden.

Vor einer Einleitung des Füllgutes (21) ist es möglich, innerhalb des Vorformlings (1) befindliche Luft abzusaugen und/oder durch ein Inertgas zu ersetzen. Dies empfiehlt sich insbesondere bei oxidationsempfindlichen Füllmedien (21).

Als Füllgut (21) können entweder reine Flüssigkeiten oder mit Zusätzen versehene Flüssigkeiten verwendet werden. Jedenfalls werden karbonisierte Füllmedien zugeführt. Da das Füllgut (21) dem Vorformling (1) bzw. dem Behälter (2) unter Druck zugeführt wird, beispielsweise mit einem Druck von 10 bar, erweist es sich als zweckmäßig, sämtliche Strömungswege für das Füllgut (21) derart zu gestalten, dass lokale Dekompressionen durch die Strömungsvorgänge vermieden werden. Eine lokale oder zeitweilige Dekompression könnte ansonsten zu einem Ausgasen von Kohlendioxid führen.

Alternativ zu der in Figur 1 dargestellten Beheizung von vorzugsweise spritzgegossenen Vorformlingen (2) ist es auch möglich, die Vorformlinge (2) unmittelbar vor ihrer Umformung in die Behälter (11) herzustellen. Dies kann beispielsweise durch einen Spritzgussvorgang wie bei einem sogenannten einstufigen Spritz-Blas-Verfahren erfolgen, ebenfalls ist eine Kompressions-Formung möglich. Eine derartige Formung der Vorformlinge (2) vermeidet die Verwendung von elektrischen und elektronischen Bauteilen im Bereich einer Heizeinrichtung oder reduziert zumindest wesentlich den Umfang einer Verwendung derartiger Teile, da diese dann nur noch für eine eventuell erforderliche Temperaturprofilierung benötigt werden.

Als Materialien für die Bauteile des Prozessrades (9) werden vorzugsweise korrosionsfeste Stoffe verwendet. Gedacht ist insbesondere an die Verwendung von nichtrostenden Stählen sowie Kunststoffen. Insbesondere ist daran gedacht, die Formen (37) ganz oder teilweise aus einem geeigneten Kunststoff auszubilden.

Zur Minimierung der erforderlichen Reckkräfte ist daran gedacht, den Reckvorgang durch eine Zufuhr des Füllgutes (21) zu unterstützen. Bei einer derartigen Unterstützung ist allerdings dafür zu sorgen, dass die Führung des Vorformlings (2) durch die Reckstange (17) sichergestellt ist. Dies kann beispielsweise dadurch erfolgen, dass die einwirkende Reckkraft gemessen wird und eine Steuerung des Volumenstromes des Füllgutes (21) derart erfolgt, dass immer eine Mindestreckkraft aufrecht erhalten bleibt. Die Größe der Reckkraft lässt sich insbesondere sehr einfach bei elektrisch angetriebenen Recksystemen durch die Messung des Antriebsstromes oder bei pneumatischen Recksystemen durch eine Druckmessung ermitteln.

Bei der Abfüllung von Behältern (11) mit dem Füllgut (21) ist es häufig erwünscht, nach einem Verschließen des Behälters (11) einen gasgefüllten Kopfraum bereitzustellen. Dieser freie Kopfraum kann durch die Volumenverminderung generiert werden, die aus dem Zurückziehen der Reckstange (17) resultiert.

Die oben bereits erläuterte Materialauswahl erfolgt insbesondere auch unter Berücksichtigung von gegebenen Hygieneanforderungen. Es wird hierbei eine Entkeimbarkeit bzw. Sterilisierbarkeit gewährleistet. Ebenfalls erfolgt ein konstruktiver Aufbau derart, dass die Anforderungen an eine gute Reinigbarkeit erfüllt sind.

Eines oder mehrere der Übergaberäder können mit Servoantrieben ausgestattet sein.

Hierdurch wird es insbesondere unterstützt, eine vollständige Trennung der Heizeinrichtung (4) vom Prozessrad (9) während der Durchführung von Reinigungsvorgängen zu realisieren. Ebenfalls ist daran gedacht, im Bereich mindestens eines der Übergaberäder zurückziehbare Handhabungselemente anzuordnen. Ein weiterer Feuchtigkeitsschutz kann durch die Verwendung eines Trockenlufttunnels erfolgen.

Nachfolgend wird beispielhaft ein konkreter Prozessablauf beschrieben. Vor oder nach dem Einsetzen des Vorformlings (2) in die Form (37) erfolgt zunächst ein Gasaustausch im Innenraum des Vorformlings, um insbesondere Sauerstoff zu verdrängen oder den Anteil von Sauerstoff zu vermindern. Ein Vorgang des Spülens und/oder Evakuierens dauert typischerweise höchstens 0,1 Sekunde. Das Recken des Vorformlings (2) unter Verwendung der Reckstange (17) dauert typischerweise etwa 0,2 Sekunden. Ebenfalls ist für das Füllen und die hieraus resultierende Umformung des Vorformlings (2) in den Behälter (11) ein Zeitraum von etwa 0,2 Sekunden vorgesehen. Für das anschließende Schaffen eines Kopfraumes wird typischerweise maximal ein Zeitraum von 0,2 Sekunden benötigt. Der Vorgang des Beruhigens und Entlastens des abgefüllten Behälters erfolgt bei stillen Getränken äußerst schnell, bei kohlensäurehaltigen Getränken kann dieser Vorgang einen Zeitraum bis zu 5 Sekunden in Anspruch nehmen.

Eine Behandlung des Kopfraumes kann anschließend beispielsweise unter Verwendung einer Hochdruckaufschäumung oder einer Zudosierung von Stickstoff erfolgen. Das anschließende Zuführen einer Verschlusskappe kann bei karbonisierten Getränken einen Zeitraum bis zu 1,5 Sekunden in Anspruch nehmen. Ebenfalls nimmt der Vorgang des Verschließens bzw. Aufschraubens beispielsweise einen Zeitraum von 1,5 Sekunden in Anspruch.

Nach dem fertigen Verschließen des Behälters (11) öffnet die Form (37) und der abgefüllte Behälter (11) wird entnommen und abtransportiert.

Während der Einleitung des Füllgutes in den umzuformenden Vorformling (2) bzw. den noch in der Formung befindlichen Behälter (11) ergibt sich in der Regel ein typischer Druckverlauf im Füllsystem bzw. im Vorformling (2) bzw. den noch in der Formung befindlichen Behälter (11). Aufgrund der Aufweitung des Behälters (11) liegt zunächst ein vergleichsweise geringer Druck vor, der zum Ende des Formungsvorgangs ansteigt. Der entsprechende Druckanstieg bzw. die Höhe des Druckanstieges im Füllsystem, insbesondere in der Füllleitung, kann als Steuergröße für einen folgenden Prozessschritt verwendet werden und gegebenenfalls den Zeitpunkt der Einleitung dieses nächsten Prozessschrittes bestimmen. Alternativ oder ergänzend ist auch daran gedacht, als Steuergrößen die Charakteristik des Druckverlaufes und/oder des Volumenstromes des Füllgutes zu verwenden.

Hinsichtlich der Temperatur des Füllgutes ist insbesondere daran gedacht, das Füllgut mit einer Umgebungstemperatur zuzuführen. In Abhängigkeit von den jeweiligen Anwendungsrandbedingungen ist aber gegenüber einer Befüllung mit Umgebungstemperatur auch eine Temperaturerhöhung oder eine Temperaturerniedrigung denkbar.

Gemäß einer weiteren Variante ist daran gedacht, den Füllvorgang zweistufig durchzuführen, wobei während der ersten Prozessstufe das Füllgut mit einer Temperatur zugeführt wird, die größer ist als die Temperatur während des zweiten Prozessschrittes. Der erste Prozessschritt kann beispielsweise durchgeführt werden, wenn über die Reckstange (11) die Längsreckung des Vorformlings (2) durchgeführt wird. Der zweite Prozessschritt schließt sich dann an die Durchführung des Reckvorganges an und entspricht der Queraufweitung des Behälters (11).

Bei der vorstehend bereits kurz erwähnten Beruhigung im Kopfraum nach der Druckentlastung ist auch daran gedacht, gegebenenfalls eine Absaugung von sich bildenden Gasen und/oder Schaum durchzuführen.

Hinsichtlich des Verschließens der fertig geformten und befüllten Behälter (11) sind ebenfalls unterschiedliche Varianten realisierbar. Bei einer Variante ist es möglich, einen Teil der Behandlungs- oder Form- und Füllstationen (10) auf dem Rotor oder Prozessrad (9) mit einem Revolverkopf zu versehen. Der Revolverkopf umfasst einerseits einen Blas- bzw. Form- und Füllkopf und andererseits einen Verschließkopf. Dies entspricht der schematischen Darstellung in Figur 8. Ebenfalls ist es aber denkbar, eine integrierte Konstruktion zu verwenden, bei der der jeweilige Kopf sowohl den Blas-, den Füll- und den Verschließvorgang durchführt.

Gemäß einer weiteren Variante sind zwar der Form- und Füllkopf und der Verschließkopf als separate Bauteile ausgebildet, jedoch verschwenkbar an jeder Form- und Füllstation (10) angeordnet. Gemäß einer dritten Variante ist lediglich der Form- und Füllkopf auf dem Rotor oder Prozessrad (9) angeordnet und es erfolgt eine Übergabe des noch offenen Behälters an eine separate Verschließvorrichtung, beispielsweise an ein Transportrad, das mit einem Verschließkopf ausgestattet ist.

Die Applikation der Verschlusselemente (15), beispielsweise der Verschlusskappen, kann beispielsweise unmittelbar nach der Öffnung der jeweiligen Form (37) und Erfassung des Behälters (11) durch ein Halte- und Greifelement erfolgen. Eine vorteilhafte Variante besteht darin, die Form (37) geschlossen zu halten und damit den Behälter (11) lagerichtig zu fixieren, wobei nur die Mündung für eine Verschließelement freigegeben wird. Diese Freigabe erfolgt in dem entweder die Form (37) für eine Winkelstrecke auf eine radial unterschiedliche Position verfahren wird oder der Form- und Füllkopf verschwenkt und oder verfahren wird, so dass die Behältermündung für eine Verschließelement frei wird.

Hierdurch würde somit eine Aufgabe der Verschlusskappen auf dem Rotor oder Prozessrad (9) erfolgen. Insbesondere ist daran gedacht, vor einer Aufgabe der Verschlusselemente (15) den Mündungsraum des gefüllten Behälters (11) mit einem Inertgas zu beaufschlagen.

Vorstehend wurde der einfacheren Beschreibung wegen davon ausgegangen, dass nur eine Vorratseinrichtung (20) für das Füllgut (21) vorgesehen ist. Tatsächlich weist die Form- und Füllvorrichtung oder -maschine aber eine weitere Vorratseinrichtung (20.1) für einen weiteren Anteil oder eine weitere Komponente des Füllgutes auf, der bzw. die einen höheren CO2-Gehalt aufweist als das Füllgut (21) und nachfolgend mit (21.1) bezeichnet ist.

Als besonders vorteilhaft hat sich gezeigt, wenn bei den vorgenannten Verfahren eine Unterschichtung erreicht wird, und zwar insbesondere in Bezug auf das Einbringen des Anteils oder der Komponente des Füllgutes (21.1) mit CO2-Gehalt oder mit dem höheren CO2-Gehalt. Es hat sich nämlich als problematisch herausgestellt, im Falle einer Voll- oder Teilkarbonatisierung des Füllgutes die rapide Druckentlastung nach dem Ausformen und Füllen der Behälter (11) von dem hohen Form- und Fülldruck bis zum Verschließen des jeweiligen Behälters beispielsweise bei Umgebungsdruck ohne Produktverlust zu gestalten. Eine hierbei auftretende massive Schaumbildung mit Produktverlust hindert bisher den Einsatz dieser hydraulischen Ausformtechnik für CO2-haltige Produkte.

Nach einer der Erfindung zugrunde liegenden Erkenntnis, ist es u.a. zur Vermeidung derartiger Produktverluste besonders vorteilhaft, wenn das Füllgut (21) bzw. (21.1) oder die Anteile des Füllgutes (21) bzw. (21.1) an zu mindestens zwei Zeitpunkten oder in zu mindest zwei Prozessphasen mit unterschiedlichen CO2-Gehalten und/oder mit unterschiedlichen Temperaturen zugeführt wird. Hierbei ist es zweckmäßig, in einer zweiten oder nachfolgenden Prozessphase das Füllgut oder die Füllgutkomponente (21.1) mit der höheren Konzentration an Kohlendioxid zuzuführen. Dies hat den Vorteil, dass zwar das Füllgut (21) und (21.1) im entstehenden Behälter (11) zusammengeführt das hydraulische Druckmedium zum Formen des Behälters (11) bilden, sich aber das in den sich bildenden Behälter (11) bereits eingebrachte Füllgut (21) beruhig hat oder im Wesentlichen beruhigt hat und beim Einbringen des Füllgutes (21.1) oder des Anteils an Füllgut (21.1) mit der höheren CO2-Konzentration zuerst weitere Lösungsprozess im Flüssigkeitsvolumen ablaufen. Die zweite oder nachfolgende Prozessphase ist dabei beispielsweise eine die Form- und Füllphase abschließende Prozessphase. Das Einleiten des Füllgutes (21.1) oder des Anteils an Füllgut (21.1) mit der höheren CO2-Konzentration in das bereits vorhandene Flüssigkeitsvolumen erfolgt bevorzugt unterschichtig, d.h. z.B. im Bereich des Bodens des sich bildenden Behälters (11). Das Einbringen der Füllgutkomponenten bzw. des Füllgutes (21) und (21.1) erfolgt gesteuert durch das Mehrwegedosierventil (22).

Eine Variante besteht darin, das Füllgut (21.1) oder den Anteil an Füllgut (21.1) mit der höheren Konzentration an Kohlendioxid vor dem Einleiten zu kühlen, und dann in der vorgenannten zweiten Prozessphase dieses Füllgut (21.1) oder den entsprechenden Anteil mit der höheren Konzentration an Kohlendioxid mit einer tieferen Temperatur als das Füllgut (21) oder der Anteil an Füllgut (21) der ersten Prozessphase in den sich bildenden Behälter (11) einzuleiten. Auch allein hierdurch stellt sich eine Unterschicht mit CO2-reichem Füllgut ein, wodurch eine Schaumbildung, auch eine Schaumbildung beim Entlasten soweit zumindest verringert wird, dass nachteilige Produktverluste nicht auftreten.

Hierbei sollte nach Möglichkeit der Kohlendioxidgehalt in der zweiten Prozessphase 30 Gew.-% über dem Kohlendioxidgehalt in der ersten Prozessphase liegen, insbesondere 50 Gew.-% bis 100 Gew.-% über dem Kohlendioxidgehalt in der ersten Phase. Idealerweise werden in der ersten oder vorausgehenden Prozessphase eine stille, d.h. CO2-freie Füllgutkomponente, d.h. das Füllgut (21) und in der zweiten Prozessphase eine CO2-reiche Füllgutkomponente, d.h. das Füllgut (21.1) in den sich bildenden Behälter (11) eingeleitet.

Eine Variante besteht darin, dass die Temperatur des Füllgutes (21.1) oder des Anteils des Füllgutes (21) der zweiten Prozessphase gekühlt ist, beziehungsweise mindestens 10 °C unter der Temperatur der ersten oder einer vorausgegangenen Prozessphase liegt, insbesondere weniger als 10 °C beträgt und idealer Weise zwischen 4°C und 8°C liegt.

Es hat sich als vorteilhaft erwiesen, wenn der Druck des Füllgutes (21.1) oder des Anteils des Füllgutes (21.1), welches bzw. welcher die höhere Kohlendioxidkonzentration und/oder die tiefere Temperatur aufweist, mindestens während des Ausformungsprozesses bzw. während der Form- und Füllphase zeitweise höher ist als der Druck mindestens eines anderen Anteils oder des restlichen Anteils des Füllgutes (21), und zwar bevorzugt um mindestens 1 bar.

Weiterhin sollte der Druck auf einer Leitungsstrecke (42) oder einem Teil der Leitungsstrecke, über die das Füllgut (21.1) oder der Anteil des Füllgutes (21.1) mit der höheren Kohlendioxidkonzentration und/oder mit der tieferen Temperatur zugeführt wird, höher als der Druck des restlichen Füllgutes (21) oder des restlichen Anteils des Füllgutes (21) sein, und zwar während des Ausformungsprozesses zumindest zeitweise um 2 bar bis 5 bar höher.

Eine Ausführung sieht vor, dass auf dem Strömungsweg des innerhalb des Reckstabes (17) fließenden Füllgutes (21) und (21.1) eine Drosselelement oder Querschnittsverengung vorgesehen ist, wobei das Drosselelement in Strömungsrichtung des Füllgutes (21) und (21.1) beispielsweise kurz vor mindestens einem Auslass (24) der des Reckstange (17)angeordnet ist. Somit wird der vorteilhafte hohe Druck bis kurz vor der ersten Entspannung beibehalten. Jedenfalls wird ein Teil des Füllgutes (11) an der Reckstange (17) vorbei und ein Teil des Füllgutes (11) durch die Reckstange hindurch zugeführt.

Dabei sollte zweckmäßiger Weise das stärker kohlendioxidhaltige Füllgut (21.1) durch die Reckstange (17) hindurch zugeführt werden. Vorteilhaft ist auch, wenn die Reckstange (17) mindestens bereichsweise relativ zum Füllgut (21) und (21.1) thermisch isoliert wird.

Die Form- und Füllvorrichtung bzw. -maschine umfasst somit zur Herstellung von gefüllten Behältern (11) aus einem thermoplastischen Material u.a. die mindestens eine entlang eines Transportweges eines Vorformlings (2) angeordnete Heizstrecke oder Heizvorrichtung (4) und wenigstens eine mit einer Form versehene Form- und Füllstation (10).

Weiterhin umfasst die Form- und Füllvorrichtung bzw. -maschine u.a. eine Zuführeinrichtung (1) für das in den Behälter (11) abzufüllendes Füllgut (21) und (21.1) sowie eine Karbonatisierungseinheit (43), die beispielsweise in der Leitungsstrecke (42) vorgesehen ist und mit der mindestens in dem Teilstrom des Füllgutes (21.1) Kohlendioxid gelöst werden kann, wobei die Form- und Füllstation (10) eine den Vorformling (2) während seiner Umformung in den Behälter (11) mindestens zeitweilig beaufschlagende Führungseinrichtung in Form einer Reckstange (17) aufweist und durch den Kanal oder Innenraum (23) der Reckstange (17) mindestens ein Teil des Füllgutes (21) leitbar ist. Am unteren Ende der Reckstange (17) ist wenigstens eine Auslassöffnung (24) des Kanals oder Innenraumes (23) vorgesehen sind.

Vorteilhafterweise ist eine Kühlungseinheit (44) zumindest entlang der Leitungsstrecke (42) für das Füllgut (21.1) vorgesehen, in welchem stromabwärts Kohlendioxid gelöst wird oder welches von der Karbonatisierungseinheit (43) zuströmt.

Hierbei sollte mindestens der Leitungsabschnitt (42), in dem das kohlendioxidreiche Füllgut (21.1) oder ein Anteil hiervon geführt wird, zumindest auf einer Teillänge thermisch isoliert, beispielsweise mit einer Isolierung aus Teflon oder aus einem teflonhaltigem Material, und/oder thermisch isoliert ausgekleidet sein, beispielsweise mit Teflon oder einem teflonhaltigem Material.

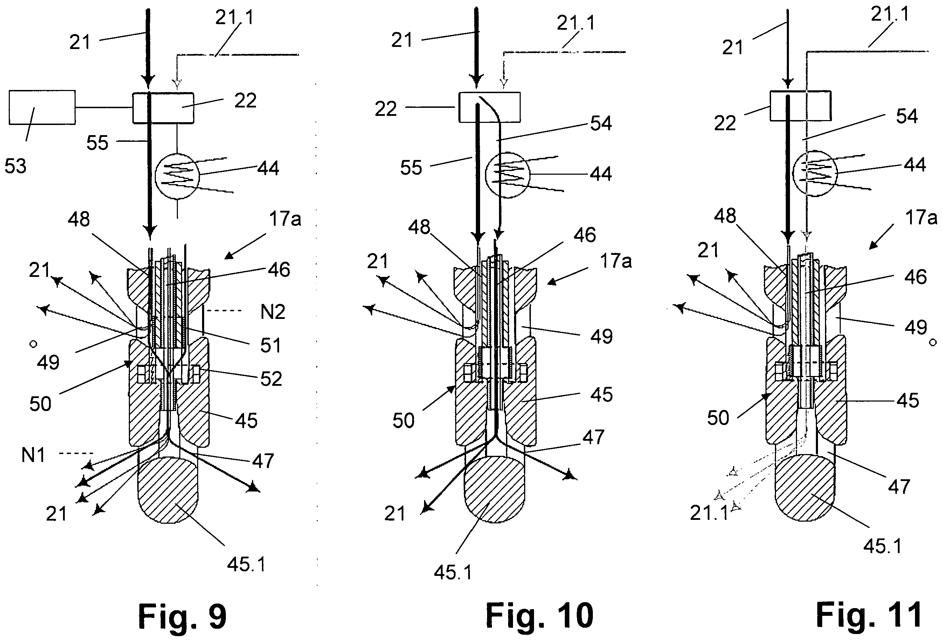

Die Figuren 9 - 11 zeigen in einer Teildarstellung und im Schnitt eine Reckstange 17a, die von ihrer grundsätzlichen Funktion her der Reckstange 17 entspricht, d.h. beim Formen und Füllen des jeweiligen Behälters (11) zur Führung und zur Steuerung insbesondere der axialen Streckung des jeweiligen Vorformlings (2) bzw. des sich formenden Behälters (11) dient. Die Reckstange (17a) besteht im Wesentlichen aus einem stabförmigen Reckstangenkörper (45) mit abgerundeten freien Reckstangenende (45.1). In dem Reckstangenkörper (45) sind mehrere Kanäle ausgebildet, und zwar ein innerer, achsgleich mit der Längsachse der Reckstange (17a) angeordneter Kanal (46), der in der Nähe des Endes (45.1) an mehreren um die Achse der Reckstange (17a) verteilten Auslassöffnungen (47) auf dem unteren Niveau N1 mündet, sowie eine den inneren Kanal (46) umschließender und von diesem inneren Kanal getrennter äußerer ringförmiger Kanal (48), der an mehreren um die Achse der Reckstange (17a) verteilten oberen Auslassöffnungen (49) an der Umfangs- bzw. Mantelfläche der Reckstange (17a) auf dem oberen Niveau N2 mündet. Im Inneren der Reckstange (17a) ist weiterhin ein in der Figur 9 allgemein mit (50) bezeichnetes Steuerventil vorgesehen, mit welchem gesteuert eine Verbindung zwischen dem inneren Kanal (46) und dem äußeren Kanal (48) hergestellt bzw. unterbrochen werden kann. Das Steuerventil (50) ist bei der dargestellten Ausführungsform im Wesentlichen von einem axial bewegbaren Verschlussring (51) gebildet, der beispielsweise durch eine nicht näher dargestellte Feder in seine in der Figur 9 angehobene und die Verbindung zwischen den Kanälen (46) und (48) freigebende Stellung vorgespannt ist. Durch eine Betätigungseinrichtung, beispielsweise durch eine in der Reckstange (17a) untergebrachte Magnetspule (52) ist der Verschlussring (51) gegen die Wirkung der Feder in seine untere, die Verbindung zwischen den Kanälen (46) und (48) unterbrechende Stellung bewegbar.

Dargestellt ist in den Figuren 9- 11 weiterhin das von einer elektronischen Steuereinheit (53) gesteuerte Mehrwegedosierventil (22), welches wiederum als Mehrwegeventil ausgeführt ist, welches mit einem ersten Anschluss oder Eingang mit der in der Figur 9 nicht dargestellten Vorratseinrichtung (20) für das Füllgut (21 und mit einem zweiten Anschluss mit der in der Figur 9 ebenfalls nicht dargestellten Vorratseinrichtung (20.1) für das Füllgut (21.1)) in Verbindung steht. Die Ausgänge des Mehrwegedosierventils (22) sind über eine Flüssigkeitsverbindung (54) mit dem inneren Kanal (46) bzw. über eine Flüssigkeitsverbindung (55) mit dem äußeren ringförmigen Kanal (48) verbunden. In der Flüssigkeitsverbindung (54) ist die Kühleinheit (44) angeordnet. Über die Steuereinheit (53) wird auch das Steuerventil (50) bzw. dessen Magnetspule (52) gesteuert, wobei das Steuerventil (50) in der dargestellten Variante als elektromagnetisch, linear angetriebenes System ausgeführt ist. Dies hat den besonderen Vorteil, dass die Verschluss- und Öffnungsgeschwindigkeiten stufenlos geregelt werden können. Es ist dabei nicht erforderlich, dass das Steuerventil (50) zu 100 % dichtend ausgelegt ist, eine geringe Leckagemenge kann toleriert werden.

Mit der Reckstange (17a) sind verschiedene Arbeitsweisen möglich, uns zwar beispielsweise das zeitgleiche Einbringen des Füllgutes, z.B. des Füllgutes (21) ohne CO2-Gehalt oder mit reduziertem CO2-Gehalt auf dem unteren Höhenniveau (N1) über die Auslassöffnungen (47) und auf dem höheren Höhenniveau (N2) über die Auslassöffnungen (49) in den Vorformling 2 bzw. in den sich formenden Behälter (11). Hierfür ist das Steuerventil (50) durch entsprechende Ansteuerung von der Steuereinheit (53) für eine Verbindung der beiden Kanäle (46) und (48) geöffnet und weiterhin das Mehrwegedosierventil (22) durch die Steuereinheit (53) derart angesteuert, dass über dieses Dosierventil lediglich eine Verbindung zu der Flüssigkeitsverbindung (55) besteht. Dieser Betriebszustand ist in der Figur 9 dargestellt.

Bei geschlossenem Steuerventil (50) ist es weiterhin möglich, durch entsprechende Ansteuerung des Mehrwegedosierventils (22) über dieses Ventil für das Füllgut (21) eine Verbindung zu beiden Kanälen (46) und (48) herzustellen, sodass das Füllgut (21) wiederum entsprechend den Pfeilen über die Auslassöffnungen (47) und (49) auf den unterschiedlichen Höhenniveaus N1 und N2 in den Vorformling (2) bzw. in den sich formenden Behälter (11) eingebracht wird. In diesem in der Figur 10 dargstellten Betriebszustand besteht weiterhin die Möglichkeit, die dem inneren Kanal (46) zugeführte und aus den unteren Austrittsöffnungen (47) austretende Teilmenge des Füllgutes (21) in der Kühleinheit (44) zu kühlen, oder aber die Flüssigkeitsverbindung (54) für einen zeitlich folgenden Verfahrensschritt mit dem Füllgut zu kühlen.

Weiterhin besteht die Möglichkeit, durch entsprechende Ansteuerung des Mehrwegedosierventils (22) das Füllgut (21.1) über die Flüssigkeitsverbindung (54) im inneren Kanal (46) für den Austritt ausschließlich an den unteren Auslassöffnungen (47) bzw. auf dem Höhenniveau N1 und das Füllgut (21) für den Austritt ausschließlich an den oberen Auslassöffnungen (49) bzw. auf dem höheren Höhenniveau N2 auszubringen, wobei das Ausbringen des Füllgutes (21) und (21.1) entweder zeitgleich, zeitversetzt oder zeitlich überlappend erfolgt, und zwar bei einem zeitversetzten oder zeitlich überlappenden Ausbringen bevorzugt in der Form, dass zunächst über die oberen Auslassöffnungen (47) das Füllgut (21) und dann über die unteren Auslassöffnungen (49) das Füllgut (21.1) ausgebildet ausgebracht werden. Dieser Betriebszustand, bei dem wiederum ein Kühlen des Füllgutes (21.1) in der Kühleinheit (44) erfolgt, ist in der Figur 11 dargestellt. Selbstverständlich können die verschiedenen, in den Figuren 9 - 11 dargestellten Betriebszustände in der jeweiligen Form- und Füllphase beliebig kombiniert werden.

So ist es beispielsweise möglich, während der jeweiligen Form- und Füllphase in einer ersten Teil- oder Prozessphase entsprechend der Figur 9 das Füllgut (21) über die Auslassöffnungen (47) und (49) einzubringen, in einer zeitlich folgenden zweiten Teil- oder Prozessphase entsprechend der Figur 10 weiterhin das Füllgut (21) über die Auslassöffnungen (47) und (49) einzubringen und dabei zugleich die Flüssigkeitsverbindung (54) mit dem die Kühleinheit (44) durchströmenden Füllgut (21) vorzukühlen und dann entsprechend der Figur 11 in einer dritten Teil- oder Prozessphase über die unteren Auslassöffnungen (47) das Füllgut (21.1) einzubringen, wobei beispielsweise über die oberen Auslassöffnungen (49) weiterhin das Füllgut (21) ausgebracht wird.

In jedem der Fälle bildet sich zwischen den Höhenniveaus N1 und N2 eine beruhigte Zwischenzone aus, die die Füllgutanteile voneinander abgrenzt. Einen vorteilhaften Einfluss hat dabei das vorgenannte elektromagnetisch angetriebene Steuerventil (50), weil es ein impulsarmes und damit vermischungsarmes Umschalten ermöglicht. Ein weiterer Vorteil besteht bei diesem elektromagnetisch angetriebenen Steuerventil (50) darin, dass es sehr robust ist und zu Reinigungszwecken bei entsprechenden Reinigungszyklen, durch schnelles ggf. mehrfaches Schalten sehr leicht gereinigt werden kann.

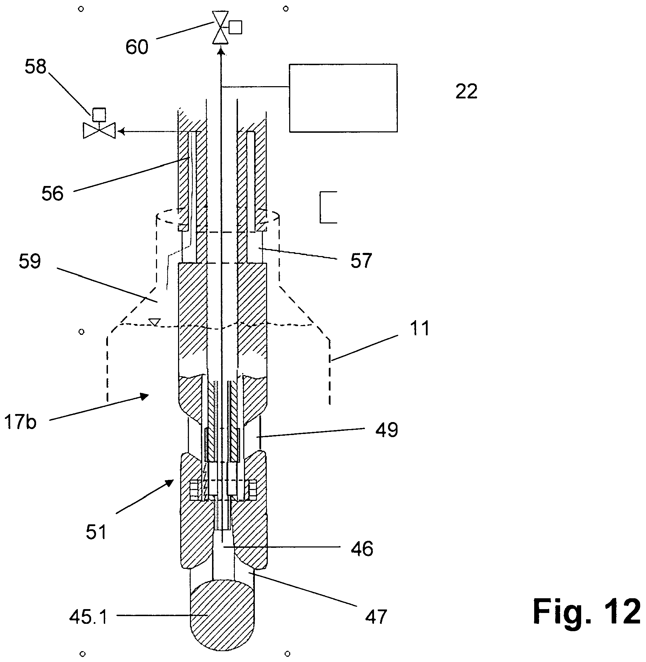

Die Figur 12 zeigt in vereinfachter Schnittdarstellung als weitere Ausführungsform eine Reckstange (17b), die sich von der Reckstange (17a) im Wesentlichen nur dadurch unterscheidet, dass zusätzlich zu den beiden Kanälen (46) und (48) in einem oberen, dem Reckstangenende (45.1) weiter entfernt liegenden Bereich ein dritter ringförmiger Kanal (56) vorgesehen ist, der an mehreren um die Achse der Reckstange (17b) verteilten Auslass- oder Entlastungsöffnungen (57) an der Umfangs- oder Mantelfläche der Reckstange (17b) mündet. Über den Kanal (56) erfolgt beispielsweise gesteuert durch ein von der Steuereinheit (53) angesteuertes Steuerventil (58) nach dem Formen und Füllen des jeweiligen Behälters (11) das Entlasten des in dem Behälter (11) über dem Füllgutspiegel gebildeten Kopfraumes (59).Über die Auslassöffnungen (47) und bei geöffnetem Steuerventil (50) auch über die Auslassöffnungen (49) ist beispielsweise gesteuert durch ein z.B. von der Steuereinheit (53) angesteuertes Steuerventil (60) eine weitere Entlastung des Behälters (11) nach dem Formen und Füllen möglich.

Die in den Figuren 10 - 13 dargestellten Reckstangen (17a) bzw. (17b) bzw. die diese Reckstangen aufweisenden Form- und Füllvorrichtungen oder -maschinen ermöglichen es auch, vor Einleitung der eigentlichen Form- und Füllphase jeweiligen Vorformling (2) zu evakuieren und/oder mit einem beispielsweise auch heißen Inert-Gas zu Spülen, und zwar bevorzugt über die unteren Auslassöffnungen (47).

Wie die Figuren 9 - 12 zeigen, sind die Auslassöffnungen (47) und (49) bzw. die Reckstange (17a) an ihrer Umfangs- oder Mantelfläche so ausgebildet, dass die Hauptstrahlrichtung des aus den Auslassöffnungen (47) bzw. (49) austretenden Mediums gegenüber der Längsachse der Reckstange (17a) in einem Winkel kleiner als 90° geneigt ist, und zwar an den unteren Auslassöffnungen (47) derart, dass dieser Winkel sich zu dem unteren Reckstangenende (45.1) öffnet und an den oberen Auslassöffnungen (49) derart, dass sich dieser Winkel zu der dem unteren Reckstangenende (45.1) abgewandten Ende der Reckstange (17a) öffnet.

Die Auslassöffnungen (47) bzw. (49) weisen insbesondere abgerundete Kanten bzw. Radien auf, so dass lokale Turbulenzen und Kavitation vermieden wird und eine stabile Schichtung erfolgt. Vorteilhafterweise werden die abgerundeten Kanten der Auslassöffnungen (47) und (49) bei der Reckstange sowohl radial innen als auch radial außen vorgesehen.

### Bezugszeichenliste

- 1: Zuführvorrichtung
- 2: Vorformling
- 3: Übergaberad
- 4: Heizeinrichtung
- 5: Mündungsabschnitt
- 6: Heizelement
- 7: Transporteinrichtung
- 8: Übergaberad
- 9: Prozessrad
- 10: Form- und Füllstation
- 11: Behälter
- 12: Entnahmerad
- 13: Ausgabestrecke
- 14: Eingabeeinrichtung
- 15: Verschlusselement
- 16: Form - Abschottung
- 17: Reckstab oder Reckstange
- 17.1: Verengung
- 18: Kuppe der Reckstange
- 19: Boden des Vorformlings
- 20: Vorratseinrichtung
- 21: Füllgut
- 22: Mehrwegedosierventil
- 23: Innenraum der Reckstange
- 24: Auslassöffnung
- 25: Rückschlagventil
- 26: Entlüftungsventil
- 27: Auslassöffnung
- 28: Anschlusselement
- 29: Dichtung
- 30: Innenraum des Vorformlings
- 31: Ringspalt
- 32: Längsachse der Flasche bzw. Reckstange
- 33: Dichtelement
- 34: Gegenelement
- 35: Lager
- 36: Zuführöffnung
- 37: Form
- 38: Verschließeinrichtung
- 39: Greifer
- 40: Werkzeugträger
- 41: Drehachse
- 42: Leitung oder Leitungsstrecke
- 43: Karbonatisierungseinheit
- 44: Kühlungseinheit
- 45: Reckstangenkörper
- 45.1: Reckstangenende
- 46: Kanal
- 47: Auslassöffnung
- 48: Kanal
- 49: Auslassöffnung
- 50: Steuerventil
- 51: Verschlussring
- 52: Mangetspule
- 53: Steuerelektronik
- 54, 55: Flüssigkeitsverbindungen
- 56: Kanal
- 57: Auslassöffnung
- 58: Steuerventil
- 59: Kopfraum
- 60: Steuerventil

## Patentansprüche

1. Verfahren zur Herstellung von mit einem flüssigen Füllgut gefüllten Behältern (11) aus Vorformlingen (2) aus einem thermoplastischen Material, wobei der jeweilige Vorformling (2) thermisch konditioniert und anschließend während einer Form- und Füllphase in einer Form (37) mit wenigstens einem flüssigen Füllgut (21, 21.1) als Druckmedium in den Behälter (11) umgeformt wird, wobei der Vorformling (2) während seiner Umformung in den Behälter (11) vorzugsweise mindestens zeitweilig durch eine Reckstange (17, 17a, 17b) geführt und in Achsrichtung gestreckt wird, wobei zumindest in einen Teilstrom des Füllgutes (21, 21.1) Kohlendioxid eingebracht oder gelöst wird,
**dadurch gekennzeichnet, dass**
das Füllgut (21, 21.1) oder Anteile des Füllgutes (21, 21.1) zumindest in zwei Zeitpunkten und/oder in zumindest zwei Prozessphasen mit unterschiedlichen Gehalten an Kohlendioxid und/oder mit unterschiedlichen Temperaturen zugeführt werden, wobei ein Teil des Füllgutes (21) an der Reckstange (17) vorbei und ein Teil des Füllgutes (21) durch die Reckstange (17) hindurch zugeführt wird.

2. Verfahren nach Anspruch 1, **dadurch gekennzeichnet, dass** in der auf eine erste Prozessphase zeitlich folgenden zweiten Prozessphase zumindest das Füllgut (21.1) oder der Anteil an Füllgut (21.1) mit der höheren Konzentration an Kohlendioxid zugeführt wird.

3. Verfahren nach Anspruch 2, **dadurch gekennzeichnet, dass** das Füllgut (21.1) oder der Anteil an Füllgut (21.1) mit der höheren Konzentration an Kohlendioxid vor dem Einleiten gekühlt wird, und/oder dass in der zweiten Prozessphase das Füllgut (21.1) oder der Anteil an Füllgut (21.1) mit der höheren Konzentration an Kohlendioxid eine tiefere Temperatur als das Füllgut (21) oder der Anteil an Füllgut (21) der ersten Prozessphase aufweist.

4. Verfahren nach einem der Ansprüche 1 bis 3, **dadurch gekennzeichnet, dass** der Kohlendioxidgehalt des Füllgutes (21.1) oder des Anteils an Füllgut (21.1) in der zweiten Prozessphase 30 Gew.-% über dem Kohlendioxidgehalt des Füllgutes (21) oder des Anteils an Füllgut (21) der ersten Prozessphase liegt, vorzugsweise 50 bis 100 Gew.-% über dem über dem Kohlendioxidgehalt des Füllgutes (21) oder des Anteils an Füllgut (21) der ersten Prozessphase.

5. Verfahren nach einem der Ansprüche 1 bis 4, **dadurch gekennzeichnet, dass** die Temperatur des Füllgutes (21.1) oder des Anteils des Füllgutes (21.1) der zweiten Prozessphase kleiner als 10 °C beträgt, insbesondere zwischen 4°C und 8°C liegt.

6. Verfahren nach einem der vorgenannten Ansprüche, **dadurch gekennzeichnet, dass** der Druck des Füllgutes (21.1) oder des Anteils des Füllgutes (21.1), welches die höhere Kohlendioxidkonzentration und/oder die tiefere Temperatur aufweist, während der Form- und Füllphase oder während des Ausformungsprozesses mindestens zeitweise höher ist, als der der Druck mindestens eines anderen oder eines restlichen Anteils des Füllgutes (21), insbesondere um mindestens 1 bar höher ist.

7. Verfahren nach Anspruch 6, **dadurch gekennzeichnet, dass** der Druck auf einer Teilleitungsstrecke höher ist als der Druck des Füllgutes (21.1) oder des Anteils des Füllgutes (21.1), welches oder welcher die höhere Kohlendioxidkonzentration und/oder die tiefere Temperatur aufweist, und zwar während der Form- und Füllphase oder während des Ausformungsprozesses mindestens zeitweise um 2 bar bis 5 bar höher als der Druck mindestens eines anderen oder eines restlichen Anteils des Füllgutes (21).

8. Verfahren nach einem der Ansprüche 6 oder 7, **dadurch gekennzeichnet, dass** in dem Strömungsweg des innerhalb des Reckstabes (17) fließenden Füllgutes (21, 21.1) oder des Anteils des Füllgutes (21, 21.1) eine Drosselelement oder Querschnittsverengung (17.1) vorgesehen ist, wobei das Drosselelement insbesondere kurz vor dem mindestens einen Füllgutauslass (24) angeordnet ist.

9. Verfahren nach einem der vorgenannten Ansprüche, **dadurch gekennzeichnet, dass** das stärker kohlendioxidhaltige Füllgut (21.1) oder der Anteil dieses Füllgutes (21.1) gekühlt werden, und/oder dass zumindest das stärker kohlendioxidhaltige Füllgut (21.1) oder der Anteil dieses Füllgutes (21.1) durch die Reckstange (17, 17a, 17b) hindurch zugeführt werden.

10. Verfahren nach einem der vorgenannten Ansprüche, **dadurch gekennzeichnet, dass**, die Reckstange (17, 17a, 17b) mindestens bereichsweise relativ zum Füllgut thermisch isoliert wird.

11. Verfahren nach einem der vorhergehenden Ansprüche, **dadurch gekennzeichnet, dass** in der ersten Prozessphase über wenigstens zwei Füllgutauslässe (47, 49) auf unterschiedlichem Höhenniveau (N1, N2) das Füllgut oder der Anteil des Füllgutes (21) ohne Kohlendioxid oder mit der reduzierten Konzentration an Kohlendioxid in den Vorformling (2) oder in den sich formenden Behälter (11) eingeleitet wird, und dass in der zeitlich folgenden zweiten Prozessphase der Form- und Füllphase zumindest das Füllgut (21.1) oder der Anteil an Füllgut (21.1) mit der höheren Konzentration an Kohlendioxid vorzugsweise auf einem niedrigeren Höhenniveau (N1) in den Vorformling (2) oder in den sich formenden Behälter (11) eingeleitet wird, wobei beispielsweise in der zweiten Prozessphase weiterhin auch das Einleiten des Füllgutes (21) oder des Anteils an Füllgut (21) ohne Kohlendioxid oder mit der reduzierten Konzentration an Kohlendioxid erfolgt, vorzugsweise auf einem höheren Höhenniveau (N2) oberhalb des niedrigeren Höhenniveaus (N1).

12. Verfahren nach Anspruch 11, **dadurch gekennzeichnet, dass** in einer dritten Prozessphase zwischen der ersten und zweiten Prozessphase durch das gekühlte Füllgut (21) oder den gekühlten Anteil an Füllgut (21) ohne Kohlendioxid oder mit der reduzierten Konzentration an Kohlendioxid ein Vorkühlen einer Flüssigkeitsverbindung (54) erfolgt, über welche in der zweiten Prozessphase das Füllgut (21.1) oder der Anteil des Füllgutes (21.1) mit der höheren Konzentration an Kohlendioxid zum Einleiten in den Vorformling (2) oder in den sich formenden Behälter (11) zugeführt wird.

13. Verfahren nach einem der vorhergehenden Ansprüche, **dadurch gekennzeichnet, dass** die Prozessphasen Teilphasen der Form- und Füllphase sind.

14. Vorrichtung zur Herstellung von mit einem flüssigen Füllgut (21, 21.1) gefüllten Behältern (11) aus Vorformlingen (2) aus einem thermoplastischen Material, mit einer Heizstrecke (4) zum Vorheizen der Vorformlinge (2), mit wenigstens einer eine Form (37) aufweisenden Form- und Füllstation (10), mit wenigstens einer Vorratseinrichtung (20, 20.1) zur Bereitstellung des Füllgutes (21, 21.1), wobei eine Karbonatisierungseinheit (43) zum Einbringen oder Lösen von Kohlendioxid zumindest in einen Teilstrom des Füllgutes (21, 21.1) vorgesehen ist, wobei die wenigstens eine Form- und Füllstation (10) mit wenigstens einer Ventileinrichtung (22) ausgebildet ist, über die das Füllgut (21, 21.1) oder Anteile des Füllgutes (21, 21.1) zumindest in zwei Zeitpunkten oder in zumindest zwei Prozessphasen mit unterschiedlichen Gehalten an Kohlendioxid und/oder mit unterschiedlichen Temperaturen dem jeweiligen Vorformling (2) oder dem jeweils sich bildenden Behälter (11) zugeführt werden können, **dadurch gekennzeichnet, dass** die Formstation (10) eine den Vorformling (2) während seiner Umformung in den Behälter (11) mindestens zeitweilig beaufschlagende Führungseinrichtung in Form einer Reckstange (17, 17a, 17b) aufweist, wobei ein Teil des Füllgutes (21) an der Reckstange (17) vorbei und ein Teil des Füllgutes (21) durch die Reckstange (17) hindurch zugeführt wird, wobei mindestens am unteren Ende der Reckstange (17, 17a, 17b) Auslassöffnungen (24, 47) vorgesehen sind.

15. Vorrichtung nach Anspruch 14, **dadurch gekennzeichnet, dass** eine Kühleinheit (44) entlang einer Leitung (42, 54) oder eines Leitungsabschnittes für dasjenige Füllgut (21.1) vorgesehen ist, in welchem stromabwärts, d.h. nach dem Kühlen und Durchströmen der Leitung (42) oder des Leitungsabschnittes Kohlendioxid gelöst wird oder welches der Leitung (42, 54) oder dem Leitungsabschnitt von der Karbonatisierungseinheit (43) zuströmt.

16. Vorrichtung nach einem der Ansprüche 14 - 15, **dadurch gekennzeichnet, dass** mindestens ein Leitungsabschnitt (42, 54), in dem das Füllgut (21.1) oder der Anteil des Füllgutes (21.1) mit dem hohen CO2-Gehalt geführt wird, isoliert ist, insbesondere mit einer Isolierung, die aus Teflon oder aus einem teflonhaltigen Material besteht, und/oder dass zumindest der Leitungsabschnitt, in dem das Füllgut (21.1) oder der Anteil des Füllgutes (21.1) mit dem hohen CO2-Gehalt geführt wird, isolierend ausgekleidet ist, beispielsweise mit Teflon oder aus einem teflonhaltigem Material.

## Claims

1. A method for producing containers (11) filled with a liquid filling material from preforms (2) made of thermoplastic material, wherein the respective preform (2) is thermally conditioned and, during a moulding and filling phase, subsequently moulded in a mould (37) to form the container (11) with at least a liquid filling material (21, 21.1) as pressure medium, wherein the preform (2), while being moulded to form the container (11), is preferably at least temporarily guided through a stretch forming bar (17, 17a, 17b) and stretched in the axial direction, wherein carbon dioxide is introduced or dissolved at least in a partial flow of the filling material (21, 21.1), **characterised in that**
the filling material (21, 21.1) or fractions of the filling material (21, 21.1) are supplied at least at two points in time and/or in at least two process phases with different contents of carbon dioxide and/or at different temperatures, wherein a portion of the filling material (21) is supplied past the stretch forming bar (17), and a portion of the filling material (21) is supplied through the stretch forming bar (17).

2. The method according to claim 1, **characterised in that** in the second process phase, which chronologically follows a first process phase, at least the filling material (21.1) or the fraction of the filling material (21.1) with the higher concentration of carbon dioxide is supplied.

3. The method according to claim 2, **characterised in that** the filling material (21.1) or the fraction of filling material (21.1) with the higher concentration of carbon dioxide is cooled prior to the introduction, and/or that in the second process phase the filling material (21.1) or the fraction of filling material (21.1) with the higher concentration of carbon dioxide has a lower temperature than the filling material (21) or the fraction of filling material (21) of the first process phase.

4. The method according to any one of claims 1 to 3, **characterised in that** the carbon dioxide content of the filling material (21.1) or of the fraction of filling material (21.1) in the second process phase lies 30% by weight above the carbon dioxide content of the filling material (21) or of the fraction of filling material (21) of the first process phase, preferably between 50 and 100% by weight above the carbon dioxide content of the filling material (21) or of the fraction of filling material (21) of the first process phase.

5. The method according to any one of claims 1 to 4, **characterised in that** the temperature of the filling material (21.1) or of the fraction of the filling material (21.1) of the second process phase is less than 10°C, in particular lies between 4°C and 8°C.

6. The method according to any one of the afore-mentioned claims, **characterised in that** the pressure of the filling material (21.1) or of the fraction of the filling material (21.1), which has the higher carbon dioxide concentration and/or the lower temperature, is at least temporarily higher than the pressure of at least one other or of a remaining fraction of the filling material (21), in particular higher by at least 1 bar, during the moulding and filling phase or during the shaping process.

7. The method according to claim 6, **characterised in that** the pressure on a partial line section is higher than the pressure of the filling material (21.1) or of the fraction of the filling material (21.1), which has the higher carbon dioxide concentration and/or the lower temperature, namely at least temporarily 2 bars to 5 bars higher than the pressure of at least one other or of a remaining portion of the filling material (21), during the moulding and filling phase or during the shaping process.

8. The method according to any one of claims 6 or 7, **characterised in that** a throttling element or cross sectional narrowing (17.1) is provided in the flow path of the filling material (21, 21.1) or of the fraction of the filling material (21, 21.1) flowing within the stretch forming bar (17), wherein the throttling element is in particular arranged just in front of the at least one filling material outlet (24).

9. The method according to any one of the afore-mentioned claims, **characterised in that** the filling material (21.1) with the higher carbon dioxide content or the fraction of this filling material (21.1) are cooled, and/or that at least the filling material (21.1) with the higher content of carbon dioxide or the fraction of this filling material (21.1) are supplied through the stretch forming bar (17, 17a, 17b).

10. The method according to any one of the afore-mentioned claims, **characterised in that** the stretch forming bar (17, 17a, 17b) is thermally insulated relative to the filling material at least in some regions.

11. The method according to any one of the preceding claims, **characterised in that** in the first process phase, the filling material or the fraction of the filling material (21) without carbon dioxide or with the reduced concentration of carbon dioxide is introduced into the preform (2) or into the container (11) being moulded via at least two filling material outlets (47, 49) at a different height level (N1, N2), and that in the second chronologically successive process phase of the moulding and filling phase, at least the filling material (21.1) or the fraction of filling material (21.1) with the higher concentration of carbon dioxide is introduced into the preform (2) or into the container (11) being moulded preferably at a lower height level (N1), wherein for example in the second process phase, the introduction of the filling material (21) or of the fraction of filling material (21) without carbon dioxide or with the reduced concentration of carbon dioxide furthermore also takes place, preferably at a higher height level (N2) above the lower height level (N1).

12. The method according to claim 11, **characterised in that** in a third process phase between the first and second process phase, a pre-cooling of a fluid connection (54) is performed by the cooled filling material (21) or the cooled portion of filling material (21) without carbon dioxide or with the reduced concentration of carbon dioxide, via which pre-cooling, in the second process phase, the filling material (21.1) or the fraction of the filling material (21.1) with the higher concentration of carbon dioxide is supplied to be introduced into the preform (2) or into the container (11) being moulded.

13. The method according to any one of the preceding claims, **characterised in that** the process phases are partial phases of the moulding and filling phase.

14. A device for producing containers (11) filled with a liquid filling material (21, 21.1) from preforms (2) made of a thermoplastic material, comprising a heating section (4) for preheating the preforms (2), comprising at least one moulding and filling station (10) having a mould (37), comprising at least one storage device (20, 20.1) for providing the filling material (21, 21.1), wherein a carbonation unit (43) is provided for introducing or dissolving carbon dioxide at least in a partial flow of the filling material (21, 21.1), wherein the at least one moulding and filling station (10) is embodied with at least one valve device (22), via which the filling material (21, 21.1) or fractions of the filling material (21, 21.1) can be supplied to the respective preform (2) or to the respective container (11) being moulded at least at two points in time or in at least two process phases with different contents of carbon dioxide and/or at different temperatures, **characterised in that** the moulding station (10) has a guide means in the form of a stretch forming bar (17, 17a, 17b), which acts at least temporarily on the preform (2) while it is moulded to form the container (11), wherein a portion of the filling material (21) is supplied past the stretch forming bar (17) and a portion of the filling material (21) is supplied through the stretch forming bar (17), wherein outlet openings (24, 47) are provided at least at the lower end of the stretch forming bar (17, 17a, 17b).

15. The device according to claim 14, **characterised in that** a cooling unit (44) is provided along a line (42, 54) or a line section for that filling material (21.1), in which carbon dioxide is dissolved downstream, i.e., after the cooling and flow-through of the line (42) or of the line section, or which filling material flows from the carbonation unit (43) to the line (42, 54) or to the line section.

16. The device according to any one of claims 14 - 15, **characterised in that** at least one line section (42, 54), in which the filling material (21.1) or the fraction of the filling material (21.1) is guided with the high CO2 content, is insulated, in particular with an insulation consisting of Teflon or of a Teflon-containing material, and/or that at least the line section, in which the filling material (21.1) or the fraction of the filling material (21.1) with the high CO2 content is guided, is cladded in an insulating manner, for example with Teflon or of a Teflon-containing material.

## Revendications

1. Procédé de fabrication, à partir de préformes (2) en un matériau thermoplastique, de récipients (11) remplis d'un produit de remplissage liquide, chaque préforme (2) étant respectivement thermiquement conditionnée, après quoi elle est transformée dans un moule (37) au cours d'une phase de moulage et de remplissage en un récipient (11) sous l'effet d'au moins un produit de remplissage liquide (21, 21.1) faisant office d'agent de pression, la préforme (2) étant, pendant sa transformation en récipient (11), de préférence temporairement au moins guidée par une barre d'étirage (17, 17a, 17b) et étirée en sens axial, du dioxyde de carbone étant introduit ou dissous dans au moins un flux partiel du produit de remplissage (21, 21.1),
**caractérisé en ce que**
le produit de remplissage (21, 21.1) ou des fractions du produit de remplissage (21, 21.1) sont, à au moins deux moments ou au cours d'au moins deux phases du processus, amenés avec différentes teneurs en dioxyde de carbone et/ou à différentes températures, une partie du produit de remplissage (21) passant à côté de la barre d'étirage (17) et une partie du produit de remplissage (21) traversant la barre d'étirage (17).

2. Procédé selon la revendication 1, **caractérisé en ce qu'**au cours de la seconde phase du processus qui suit chronologiquement une première phase du processus, le produit de remplissage (21.1) ou la fraction de produit de remplissage (21.1) introduits sont au moins le produit ou la fraction de produit avec la concentration supérieure en dioxyde de carbone.

3. Procédé selon la revendication 2, **caractérisé en ce que** le produit de remplissage (21.1) ou la fraction de produit de remplissage (21.1) avec la concentration supérieure en dioxyde de carbone est refroidi(e) avant l'introduction et/ou **en ce qu'**au cours de la seconde phase du processus le produit de remplissage (21.1) ou la fraction de produit de remplissage (21.1) avec la concentration supérieure en dioxyde de carbone a une température inférieure à celle du produit de remplissage (21) ou de la fraction de produit de remplissage (21) de la première phase du processus.

4. Procédé selon l'une des revendications 1 à 3, **caractérisé en ce que** la teneur en dioxyde de carbone du produit de remplissage (21.1) ou de la fraction de produit de remplissage (21.1) au cours de la seconde phase du processus est supérieure de 30 % en poids à la teneur en dioxyde de carbone du produit de remplissage (21) ou de la fraction de produit de remplissage (21) de la première phase du processus, et de préférence supérieur de 50 à 100 % en poids à la teneur en dioxyde de carbone du produit de remplissage (21) ou de la fraction de produit de remplissage (21) de la première phase du processus.

5. Procédé selon l'une des revendications 1 à 4, **caractérisé en ce que** la température du produit de remplissage (21.1) ou de la fraction de produit de remplissage (21.1) de la seconde phase du processus est inférieure à 10 °C et notamment comprise entre 4°C et 8°C.

6. Procédé selon l'une des revendications précédentes, **caractérisé en ce que** la pression du produit de remplissage (21.1) ou de la fraction de produit de remplissage (21.1) qui présente la concentration supérieure en dioxyde de carbone et/ou la température inférieure est, pendant la phase de moulage et de remplissage ou pendant le processus de formage temporairement au moins supérieure à la pression d'au moins une autre fraction ou d'une fraction restante du produit de remplissage (21), et notamment supérieure d'au moins 1 bar.

7. Procédé selon la revendication 6, **caractérisé en ce que** la pression sur une section partielle de conduite est supérieure à la pression du produit de remplissage (21.1) ou de la fraction de produit de remplissage (21.1) qui présente la concentration supérieure en dioxyde de carbone et/ou la température inférieure, à savoir temporairement au moins pendant la phase de moulage et de remplissage ou pendant le processus de formage supérieure de 2 bars à 5 bars à la pression d'au moins une autre fraction ou d'une fraction restante du produit de remplissage (21).

8. Procédé selon l'une des revendications 6 ou 7, **caractérisé en ce qu'**un élément d'étranglement ou une réduction de la section (17.1) est prévu dans la voie d'écoulement du produit de remplissage (21, 21.1) ou de la fraction de produit de remplissage (21, 21.1) qui s'écoule à l'intérieur de la barre d'étirage (17), cet élément d'étranglement étant notamment disposé peu avant la (les) sortie(s) (24) du produit de remplissage.

9. Procédé selon l'une des revendications précédentes, **caractérisé en ce que** le produit de remplissage (21.1) avec la teneur en dioxyde de carbone la plus élevée ou la fraction de ce produit de remplissage (21.1) est refroidi(e), et/ou qu'au moins le produit de remplissage (21.1) avec la teneur en dioxyde de carbone la plus élevée ou la fraction de ce produit de remplissage (21.1) est amené à travers la barre d'étirage (17, 17a, 17b).

10. Procédé selon l'une des revendications précédentes, **caractérisé en ce que** la barre d'étirage (17, 17a, 17b) est en partie au moins thermiquement isolée par rapport au produit de remplissage.

11. Procédé selon l'une des revendications précédentes, **caractérisé en ce qu'**au cours de la première phase du processus le produit de remplissage ou la fraction de produit de remplissage (21) sans dioxyde de carbone ou avec la concentration réduite en dioxyde de carbone est introduit dans la préforme (2) ou dans le récipient en cours de formation (11) par au moins deux orifices de sortie du produit de remplissage (47, 49) à des niveaux de hauteur différents (N1, N2), et qu'au cours de la seconde phase du processus qui suit chronologiquement, la phase de moulage et de remplissage, au moins le produit de remplissage (21.1) ou la fraction de produit de remplissage (21.1) avec la concentration supérieure en dioxyde de carbone est introduit dans la préforme (2) ou dans le récipient en cours de formation (11) de préférence à un niveau de hauteur inférieur (N1), le produit de remplissage (21) ou de la fraction de produit de remplissage (21) sans dioxyde de carbone ou avec la concentration réduite en dioxyde de carbone étant par exemple également introduit pendant la seconde phase du processus et de préférence à un niveau de hauteur (N2) supérieur au-dessus du niveau de hauteur inférieur (N1).

12. Procédé selon la revendication 11, **caractérisé en ce qu'**au cours d'une troisième phase du processus entre la première et la seconde phase du processus, le produit de remplissage (21) refroidi ou la fraction refroidie du produit de remplissage (21) sans dioxyde de carbone ou avec la concentration réduite en dioxyde de carbone entraîne une préréfrigération d'un raccord pour liquide (54) par lequel le produit de remplissage (21.1) ou la fraction du produit de remplissage (21.1) avec la concentration supérieure en dioxyde de carbone est amené pour être introduit dans la préforme (2) ou dans le récipient en cours de formation (11) au cours de la seconde phase du processus.

13. Procédé selon l'une des revendications précédentes, **caractérisé en ce que** les phases du processus sont des phases partielles de la phase de moulage et de remplissage.

14. Dispositif de fabrication, à partir de préformes (2) en un matériau thermoplastique, de récipients (11) remplis d'un produit de remplissage liquide (21, 21.1), avec une section de chauffage (4) pour le préchauffage des préformes (2), avec une station de moulage et de remplissage (10) présentant au moins un moule (37), avec au moins un dispositif de stockage (20, 20.1) pour la mise à disposition du produit de remplissage (21 , 21.1), une unité de carbonation (43) étant prévue pour l'introduction ou la dissolution de dioxyde de carbone dans au moins un flux partiel de produit de remplissage (21 , 21.1), la ou les stations de moulage et de remplissage (10) étant dotée(s) d'au moins un dispositif de valve (22) par lequel le produit de remplissage (21, 21.1) ou des fractions du produit de remplissage (21, 21.1) sont, à au moins deux moments ou au cours d'au moins deux phases du processus, amenés avec différentes teneurs en dioxyde de carbone et/ou à différentes températures dans la préforme (2) respective ou dans le récipient respectif (11) en cours de formation, **caractérisé en ce que** la station de moulage (10) présente un dispositif de guidage sous forme d'une barre d'étirage (17, 17a, 17b) qui agit sur la préforme (2) temporairement au moins pendant sa transformation en récipient (11), une partie du produit de remplissage (21) passant à côté de la barre d'étirage (17) et une partie du produit de remplissage (21) traversant la barre d'étirage (17), des orifices de sortie (24, 47) étant prévus au moins à l'extrémité inférieure de la barre d'étirage (17, 17a, 17b).

15. Dispositif selon la revendication 14, **caractérisé en ce qu'**une unité de refroidissement (44) est prévue le long d'une conduite (42, 54) ou le long d'une section de conduite pour le produit de remplissage (21.1) dans lequel du dioxyde de carbone est dissout en aval, c'est-à-dire après le refroidissement et le passage à travers la conduite (42) ou la section de conduite, ou lequel afflue dans la conduite (42, 54) ou la section de conduite en provenance d'une unité de carbonation (43).

16. Dispositif selon l'une des revendications 14 - 15, **caractérisé en ce qu'**une section de conduite (42, 54) au moins dans laquelle est conduit le produit de remplissage (21.1) ou la fraction de produit de remplissage (21.1) avec la teneur en CO2 élevée est isolée, notamment avec une isolation en Téflon ou en un matériau contenant du Téflon, et/ou **en ce qu'**au moins la section de conduite dans laquelle est conduit le produit de remplissage (21.1) ou la fraction de produit de remplissage (21.1) avec la teneur en CO2 élevée est garnie d'une isolation, par exemple en Téflon ou en un matériau contenant du Téflon.
